# EUROPEAN PATENT APPLICATION

(11) **EP 1 160 709 A2**
(43) Date of publication of application: **05.12.2001**
(21) Application number: 01304406.0
(22) Date of filing: 18.05.2001
(51) Int. Cl.: G06F 17/60

(54) **Information distribution method, information distribution system, communication terminal, information distribution apparatus and duplicate distribution preventing method**

(30) Priority: 22.05.2000 JP 2000149868
(71) Applicant: SONY CORPORATION, Tokyo (JP)
(72) Inventor: Iida, Sachio, Shinagawa-ku, Tokyo (JP)
(74) Representative: Nicholls, Michael John

(57) **Abstract**

A content provision request including request source identification information and information-identification information for identifying content is transmitted from a mobile telephone terminal to a content distribution server apparatus, which transfers the content provision request to a content providing server apparatus. The content providing server apparatus references a purchase history list stored in a purchase history storage section to check if the provision of the requested content will cause a duplicate purchase and transmits a result of the checking to the mobile telephone terminal via the content distribution server apparatus. If the received result indicates a duplicate purchase, the mobile telephone terminal notifies its user of the result.

## Description

The present invention relates generally to an information distribution method, an information distribution system, a communication terminal, an information distribution apparatus, and a duplicate distribution preventing method which are for use in distributing content such as music over a communication line.

Recently, content distribution services for distributing content such as music over communication networks such as the Internet have come into existence. In the case of music content distribution services of example, a user accesses a so-called home page of a music content distributor such as a record company by use of user's personal computer having a communication capability for example.

On the accessed home page, the user selects desired music content and enters a credit card number for paying the fee of the selected content. The information about the selection and payment is transmitted to the content distributor. The content distributor delivers the requested content to the user's personal computer over the communication network from a music content provider.

The personal computer of the user receives the requested music content transmitted over the communication network and stores the received music content into its memory. Consequently, the user can read any time the music content from the memory of the personal computer and listen to the music.

Thus, end users can obtain desired content any time via communication networks without having to go to CD (Compact Disc) stores, if the desired content is music for example, and buy a CD in which the desired music is recorded.

From a content distribution service practiced via a communication network, a user can receive the provision of same content any number of times. For example, this capability provides convenience for users who mistakenly deleted the provided music content and want the provision of the same music content again.

However, this capability may sometimes cause problems such as that the previously distributed content which is unwanted this time is distributed again mistakenly or plural family members configured to share content are redundantly distributed with a same piece of content.

If a content distribution service is chargeable, a charge occurs every time content provision is received. Therefore, if a same piece of content is received multiple times by a single user or by plural family users unnecessarily, an unnecessary extra cost is incurred. Besides, this may increase the amount of unnecessary information in the content memory of a portable communication terminal.

It is therefore an object of the present invention to provide an information distribution method, an information distribution system, a communication terminal, an information providing apparatus, and an information duplicate distribution preventing method which are capable of surely and easily preventing content distribution from being mistakenly executed in a duplicate manner.

In carrying out the invention and according to one aspect thereof, there is provided an information distribution method comprising: a provision request transmission step for transmitting, from a communication terminal to an information distribution apparatus, an information provision request including a request source identification information and information-identification information for information to be provided; in the information distribution apparatus, on the basis of the information provision request from the communication terminal, a duplicate provision decision step for referencing a list containing the request source identification information about a request source to which information has been supplied before and the information-identification information about the information supplied to the request source to determine whether the provision of information requested this time to the request source is the duplicate provision; a decision result transmission step for transmitting a result of the decision made in the duplicate provision decision step from the information distribution apparatus to the communication terminal; and in the communication terminal, a notification step for notifying a user of the communication terminal of the decision result if the decision result supplied from the information distribution apparatus is at least indicative of the duplicate provision of the requested information.

According to the information distribution method when the user requests the distribution of information from the information distribution apparatus through the communication terminal, an information provision request including the request source identification information indicative of a request source of the information and the information-identification information indicative of the information to be requested for provision is transmitted from the user's communication terminal to the information distribution apparatus in the provision request transmission step.

The information distribution apparatus has a list containing the request source identification information indicative of the request sources which have accepted information so far and the information-identification information indicative of the information distributed to these request sources. In the duplicate provision decision step, on the basis of the request source identification information and information-identification information included in the information provision request transmitted from the communication terminal, it is determined whether the provision of the requested information is duplicate.

The decision result obtained in the duplicate provision decision step is transmitted to the requesting communication terminal in the decision result transmission step. If the decision result transmitted to the communication terminal is at least indicative of a duplicate provision, the user of the communication terminal is notified of the decision result in the notification step in the communication terminal.

Consequently, if the requested information is the same as what has been provided so far, the user of the communication terminal is notified thereof, thereby preventing the same information from being provided again. If the distribution of the information is chargeable, the user can prevent the duplicate purchase of that information.

In carrying out the invention and according to another aspect thereof, there is provided a duplicate distribution preventing method for preventing duplicate distribution, to a communication terminal, of information to be supplied from an information distribution apparatus in response to a request for the information from the communication terminal, the duplicate distribution preventing method being executed in the communication terminal, comprising: a specification input acceptance step for accepting a specification input for requesting the information distribution apparatus for information; on the basis of the specification input accepted in the specification input acceptance step, a duplicate provision decision step for referencing a list containing information which has been supplied before to determine whether the information requested this time is one provided before; and a notification step for notifying a user of the communication terminal of the decision result if the decision result in the duplicate provision decision step at least indicates that the requested information is one provided before.

According to the duplicate distribution preventing method, a specification input for specifying the information to be requested for provision is accepted in the specification input acceptance step in the information requesting communication terminal. Then, in the duplicate provision decision step, on the basis of the accepted specification input, the history list of the communication terminal of the information provided before is referenced to determine whether the information requested this time matches any of the information provided before.

In the duplicate provision decision step, if it is determined that the information requested this time has been provided before, then, in the notification step, the user of the communication terminal is notified that the information requested has been provided before.

Consequently, if the information to be provided is one provided before, the user is notified thereof, so that the user can prevent the provision of the same information in a duplicate manner. If the distribution of information is chargeable, the user can prevent the duplicate purchase of the same information.

The communication terminal can promptly determine whether the information requested for provision has been provided before or not and notify the user of the result. This significantly enhances the reliability of the communication terminal in receiving the distribution of information.

The invention will be further described by way of example with reference to the accompanying drawings, in which:-
FIG. 1 is a schematic diagram illustrating a music distribution system in which an information distribution system according to the invention is applied;
FIG. 2 is a schematic diagram illustrating a music distribution system of a first embodiment in which an information distribution system according to the invention has been applied;
FIG. 3 is a block diagram illustrating an exemplary configuration of a content providing server apparatus of the music distribution system shown in FIG. 2;
FIG. 4 is a diagram illustrating a purchase history list arranged on a hard disk of the content providing server apparatus shown in FIG. 3;
FIG. 5 is a block diagram illustrating an exemplary configuration of a content distribution server apparatus of the music distribution system shown in FIG. 2;
FIG. 6 is a block diagram illustrating an exemplary configuration of a mobile telephone terminal of the music distribution system shown in FIG. 2;
FIG. 7 is a flowchart describing the content distribution processing to be executed in the mobile telephone terminal shown in FIG. 6;
FIG. 8 is a flowchart describing the content distribution processing to be executed in the content distribution server apparatus shown in FIG. 5;
FIG. 9 is a flowchart describing the content distribution processing to be executed in the content providing server apparatus shown in FIG. 3;
FIG. 10 is a schematic diagram illustrating a music distribution system of a second embodiment in which an information distribution system according to the invention has been applied;
FIG. 11 is a block diagram illustrating an exemplary configuration of a content providing server apparatus of the music distribution system shown in FIG. 10;
FIG. 12 is a block diagram illustrating an exemplary configuration of a content distribution server apparatus of the music distribution system shown in FIG. 10;
FIG. 13 is a flowchart describing the content distribution processing to be executed in the content distribution server apparatus shown in FIG. 11;
FIG. 14 is a flowchart describing the content distribution processing to be executed in the content providing server apparatus shown in FIG. 12;
FIG. 15 is a schematic diagram illustrating a music distribution system of a third embodiment in which an information distribution system according to the invention has been applied; and
FIG. 16 is a flowchart describing the content distribution processing to be executed in a mobile telephone terminal shown in FIG. 15.

The following describes several preferred embodiments of an information distribution method, an information distribution system, a communication terminal, an information distribution apparatus, and a duplicate distribution preventing method according to the invention with reference to drawings. It should be noted that the following embodiments will be described by use of an example in which the present invention is applied to a music distribution system for distributing music data (music software) of each piece of music as content to users over communication lines. Therefore, in the following embodiments, music data denote a piece of music in unit of which information distribution is performed.

### [Overview of the music distribution system]

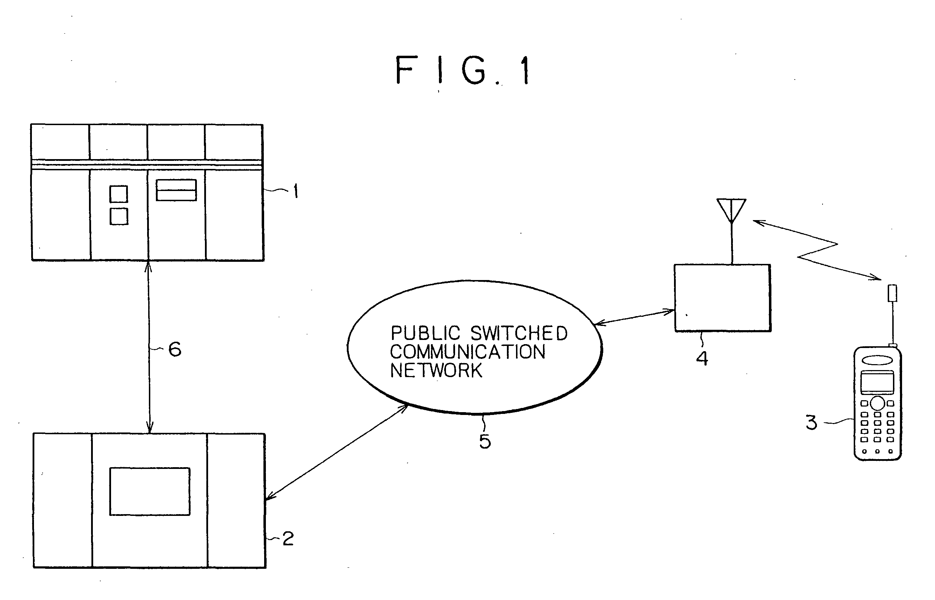

Now, referring to FIG. 1, there is shown a schematic diagram illustrating the music distribution system practiced as one preferred embodiment of the invention. As shown in FIG. 1, the music distribution system comprises a content providing server apparatus 1, a content distribution server apparatus 2, and a mobile telephone terminal 3 owned by a user for receiving the provision of music data.

The content providing server apparatus 1 is arranged at a content provider such as a record company which concludes a contract with artists for music distribution (provision) and holds the music data of music to be distributed. The content distribution server apparatus 2 is arranged at a content distributor such as a telephone company which manages a so-called home page for music distribution and distributes the music data supplied from the content providing server apparatus 1 to mobile telephone terminals which requested the provision of the music data.

For example, the content providing server apparatus 1 has a capability of a management warehouse of the content provider which creates music data and distributes the created music data. The content distribution server apparatus 2 has a capability of a store which sells the music data supplied from the content providing server apparatus 1 to users.

The user wanting to purchase music data can receive the provision of the music data for a desired piece of music from the content distribution server apparatus 2 by use of the mobile telephone terminal 3 of his own.

In order to transfer various data including provision requests and music data, the content providing server apparatus 1 and the content distribution server apparatus 2 and the content distribution server apparatus 2 and the mobile telephone terminal 3 are interconnected by a public or dedicated communication line in an electrical, optical, or wireless manner.

In the following embodiments, the content providing server apparatus 1 is connected to the content distribution server apparatus 2 by a dedicated communication line 6 and the content distribution server apparatus 2 is connected to the mobile telephone terminal 3 by a public switched phone line (telephone line) via a base station 4 and a public switched communication line 5 as shown in FIG. 1.

When the user of the mobile telephone terminal 3 wants to receive the distribution of the music data for a desired piece of music, the user calls the content distribution server apparatus 2 from the mobile telephone terminal 3 to establish a telephone connection and sends a request for the provision of the music data to the content distribution server apparatus 2.

Receiving the provision request from the mobile telephone terminal 3, the content distribution server apparatus 2 receives the requested music data from the content providing server apparatus 1 and sends the received music data to the requesting mobile telephone terminal 3. The mobile telephone terminal 3 stores the music data received from the content distribution server apparatus 2 into a memory of the mobile telephone terminal 3.

The music data thus distributed to the mobile telephone terminal 3 and stored in its memory are reproduced by an audio playback apparatus embedded in the mobile telephone terminal 3 for example for the user to listen to the reproduced sound.' In the following embodiments, the content providing server apparatus 1 and the content distribution server apparatus 2 constitute one information distribution apparatus as shown in FIG. 1.

It should be noted that, when the mobile telephone terminal 3 receives the provision of music data from the content distribution server apparatus 2, the provided music data is charged for the user. The settlement for this charge is processed by the content providing server apparatus 1 or the content distribution server apparatus 2 by use of such information unique to the user as his credit card number for example.

In the following embodied music distribution system, a list (purchase history information) of music data purchased by the user before allows to prevent the distribution of information which was provided before since the user has mistakenly requested this time for example.

### [First embodiment]

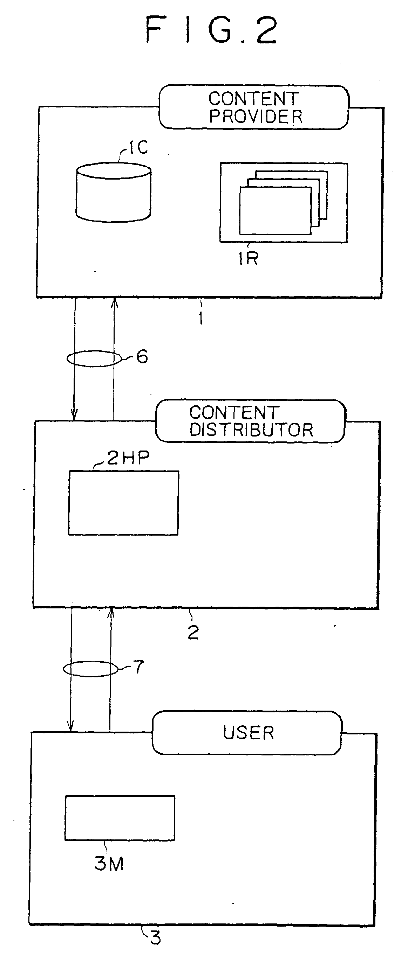

FIG. 2 shows an information distribution system of a first embodiment, which is applied to the music distribution system shown in FIG. 1, according to the invention. The music distribution system of the first embodiment is obtained by applying one embodiment of an information distribution method'according to the invention.

As shown in FIGS. 1 and 2, the music distribution system of the first embodiment comprises a content providing server apparatus 1, a content distribution server apparatus 2, and a mobile telephone terminal 3 which is operated by its user.

The content providing server apparatus 1 is connected to the content distribution server apparatus 2 by a dedicated communication line 6 and the content distribution server apparatus 2 is connected to the mobile telephone terminal 3 by a public switched communication line 7 as described with reference to FIG. 1.

In the first embodiment, the content providing server apparatus 1 has a content storage section 1C for holding the music data of music to be distributed and a purchase history storage section 1R for holding a purchase history list, which is purchase history information for each user of the music data purchased before.

When the user sends a request for music data from the mobile telephone terminal 3 to the content distribution server apparatus 2 via the public switched communication line 7, the content distribution server apparatus 2 notifies the content providing server apparatus 1 of the provision request from the mobile telephone terminal 3 via the dedicated communication line 6.

In this case, the music data provision request from the mobile telephone terminal 3 to the content distribution server apparatus 2 and the notification from the content distribution server apparatus 2 to the content providing server apparatus 1 of this request include request source identification information for identifying the source of the music data provision request and music data identification information (information-identification information) for identifying the requested music data.

The request source identification information is such information unique to each request source as a subscriber number (telephone number) assigned to the user's mobile telephone terminal by the content distributor such as a telephone company having the content distribution server apparatus 2, a subscriber registration number, and a user's credit card number for use in settlement of the charge for purchased music data.

The music data identification information represents such a unique number'assigned to each piece of music data to be distributed as the international standard identification code ISRC (International Standard Recording Code) to be attached to music software for example.

On the basis of the request source identification information included in the notification from the content distribution server apparatus 2 of the provision request from the mobile telephone terminal 3 and the music data identification information, the content providing server apparatus 1 checks the list recorded in the purchase history storage section 1R to make sure that the provision of the music data requested from the mobile telephone terminal 3 this time does not cause a duplicate purchase. Namely, the content providing server apparatus 1 makes sure that the user will not purchase the same music data as purchased before.

If a duplicate provision is expected in the content providing server apparatus 1, it notifies the user of the mobile telephone terminal 3 through the content distribution server apparatus 2 and the mobile telephone terminal 3 that the requested music data are one which was provided before and therefore will cause a duplicate purchase. Receiving this notification, the user of the mobile telephone terminal 3 checks the provision request made by him, thus preventing the duplicate purchase of the same music data.

If no duplicate purchase is caused or if the provision request for the same music data has been intentionally issued from the mobile telephone terminal 3, the content distribution server apparatus 2 receives the requested music data from the content providing server apparatus 1 and sends the received music data to the mobile telephone terminal 3 via the public switched communication line 7.

The mobile telephone terminal 3 receives the music data supplied from the content distribution server apparatus 2 and stores the received music data into its memory 3M, from which the user can reproduce the music data as required.

### [Content providing server apparatus]

The following describes each of the content providing server apparatus 1, the content distribution server apparatus 2, and the mobile telephone terminal 3 which constitute the music distribution system of the first embodiment shown in FIG. 2. First, the content providing server apparatus 1 will be described.

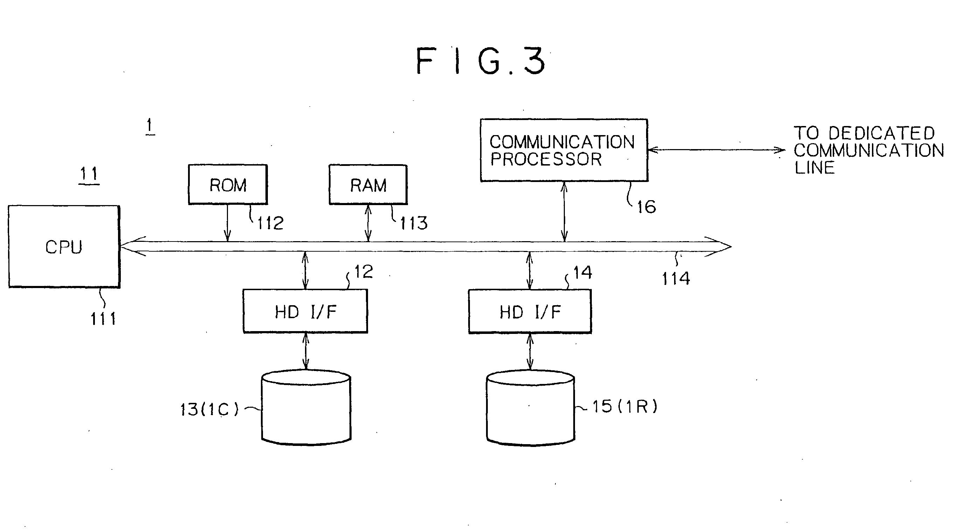

FIG. 3 is a block diagram illustrating an exemplary configuration of the content providing server apparatus 1 shown in FIG. 2. As shown in FIG. 3, the content providing server apparatus 1 of the first embodiment comprises a controller 11, hard disk interfaces (hereafter referred to as a HD I/F) 12 and 14, hard disks 13 and 15, and a communication processor 16.

The controller 11 controls the components of the content providing server apparatus 1 and comprises a CPU (Central Processing Unit) 111, and a ROM (Read Only Memory) 112, a RAM (Random Access Memory) 113 which are interconnected by a CPU bus 114.

The ROM 112 stores various processing programs and necessary data for the processing. The RAM 113 is mainly used as a work area for processing by temporarily storing data which occur in intermediate stages of each processing.

The hard disk 13 stores music data of music to be distributed and corresponds to the content storage section 1C of the content providing server apparatus 1 shown in FIG. 2. The controller 11 of the content providing server apparatus 1 reads music data from the hard disk 13 via the HD I/F 12 and stores music data provided via an input terminal, not shown, of the content providing server apparatus 1 into the hard disk 13.

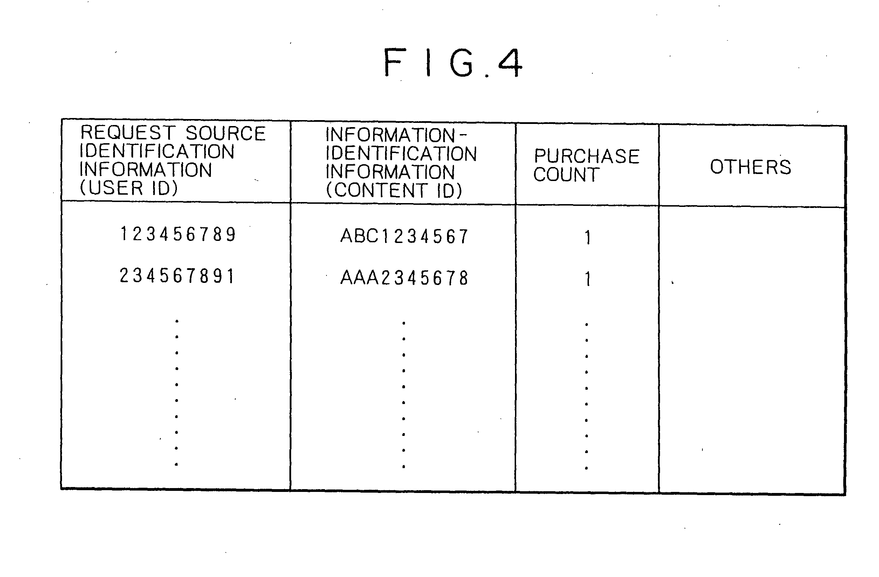

The hard disk 15 stores a music data purchase history list and corresponds to the purchase history storage section 1R of the content providing server apparatus 1 shown in FIG. 2. FIG. 4 shows one example of the purchase history list arranged on the hard disk 15.

As shown in FIG. 4, the hard disk 15 of the content providing server apparatus 1 of this embodiment stores a purchase history list which contains the purchase history information composed of request source identification information (or a user ID), music data identification information (or a content ID), a purchase count, and so on.

The controller 11 of the content providing server apparatus 1 references the purchase history list created on the hard disk 15 via the HD I/F 14 to check if the provision of the music data requested by the user causes a duplicate provision or not. Also, the controller 11 can additionally store new purchase history information to the purchase history list via the HD I/F 14.

The communication processor 16 is used to make communication with the content distribution server apparatus 2 via the dedicated- communication line 6. Therefore, the various notifications and requests supplied from the content distribution server apparatus 2 via the dedicated communication'line 6 are received by the communication processor 16 to be converted into a form processible by the content providing server apparatus 1 and the converted information is supplied to the controller 11.

The information such as music data supplied from the content providing server apparatus 1 is supplied to the communication processor 16 from the controller 11. The information from the controller 11 is converted by the communication processor 16 into a format for transmission and the converted information is then transmitted to the content distribution server apparatus 2 via the dedicated communication line 6.

### [Content distribution server apparatus]

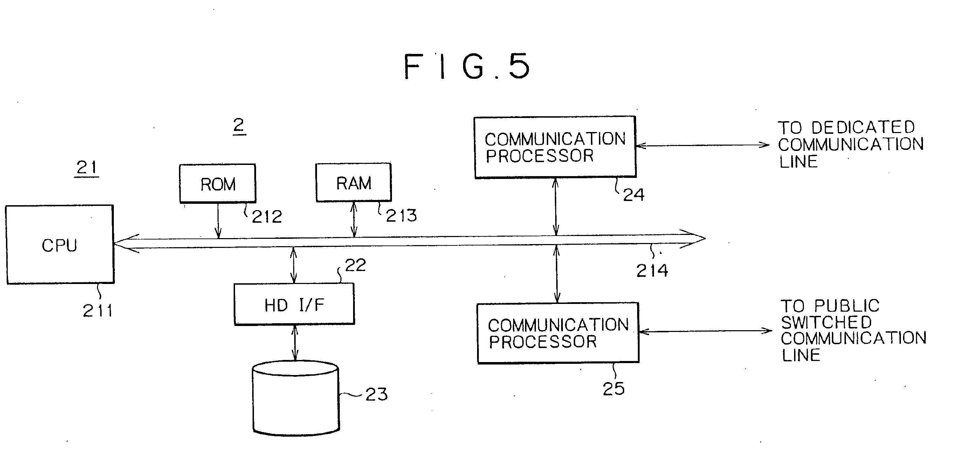

The following describes the content distribution server apparatus 2 shown in FIG. 2. FIG. 5 is a block diagram illustrating an exemplary configuration of the content distribution server apparatus 2 shown in FIG. 2. As shown in FIG. 5, the content distribution server apparatus 2 of the first embodiment comprises a controller 21, a HD I/F 22, a hard disk 23, and communication processors 24 and 25.

The controller 21 controls the components of the content distribution server apparatus 2 and is connected to a CPU 211, a ROM 212, and a RAM 213 via a CPU bus 214. The ROM 212 stores various processing programs and necessary data and information necessary for forming a home page 2HP by means of which music data are provided to the user. The RAM 213 is mainly used as a work area for processing by temporarily storing data which occur in intermediate stages of each processing.

The home page 2HP through which music data are provided to users has a list of distributable music data and an input column in which request source identification information is entered, accepts the selection of music data made by the user and the input of request source identification information, forms a music data provision request, and transmits this request from the mobile telephone terminal 3 to the content distribution server apparatus 2.

The hard disk 23 stores the music data supplied from the content providing server apparatus 1. The controller 21 of the content distribution server apparatus 2 reads the music data from the hard disk 23 through the HD I/F 22 and stores the music data supplied from the content providing server apparatus 1 into the hard disk 23 through the dedicated communication line as will be described later.

The communication processor 24 is used to make communication with the content providing server apparatus 1 via the dedicated communication line 6. Therefore, the music data, etc. supplied from the content providing server apparatus 1 via the dedicated communication line 6 are received by the communication processor 24 to be converted into a form processible by the content distribution server apparatus 2 and the converted data are supplied to the controller 21.

The information including notifications and requests transmitted from the content distribution server apparatus 2 to the content providing server apparatus 1 are supplied from the controller 21 to the communication processor 24. The information from the controller 21 is converted by the communication processor 24 into a transmission form to be transmitted to the content providing server apparatus 1 via the dedicated communication line 6.

The communication processor 25 is used to make communication with the mobile telephone terminal 3 of the user via the public switched communication line 7. Therefore, each provision request for music data issued from the mobile telephone terminal 3 via the public switched communication line 7 is received by the communication processor 25 to be converted into a form processible by the content distribution server apparatus 2 and the converted provision request is supplied to the controller 21.

The information such as music data to be supplied from the content distribution server apparatus 2 to the mobile telephone terminal 3 is supplied from the controller 21 to the communication processor 25. The information from the controller 21 is converted by the communication processor 25 into a transmission form to be transmitted to the mobile telephone terminal 3 via the public switched communication line 7.

### [Mobile telephone terminal]

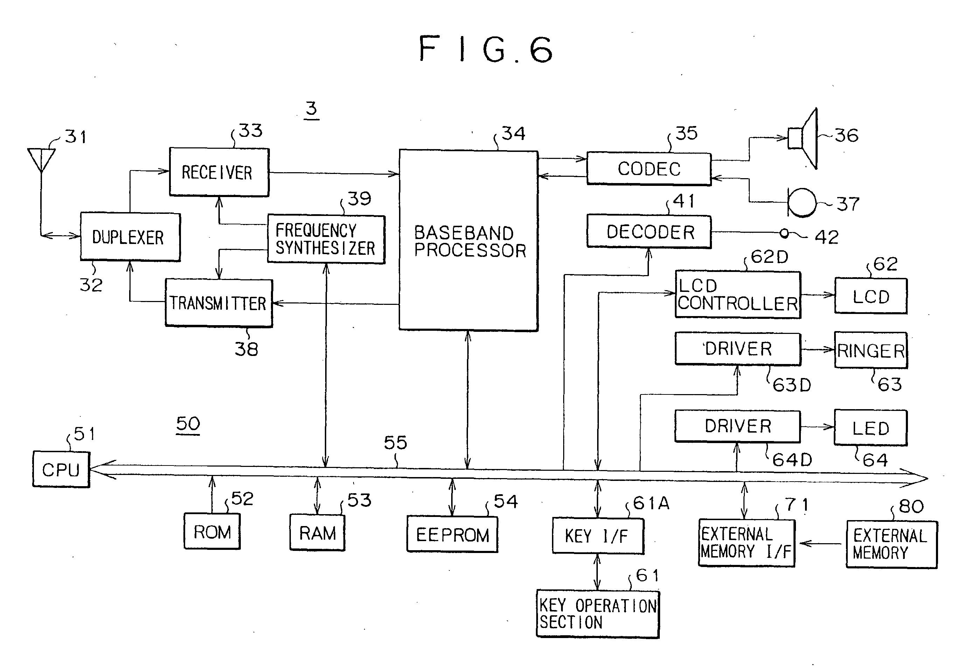

The following describes the mobile telephone terminal 3 shown in FIG. 2. FIG. 6 is a block diagram illustrating specifically the mobile telephone terminal 3 shown in FIG. 2, practiced as one embodiment of the invention. As shown in FIG. 6, a controller 50 of the mobile telephone terminal 3 is connected to a CPU 51, a ROM 52, and an EEPROM (Electrically Erasable and Programmable ROM) 54 via a CPU bus 55.

The ROM 52 stores programs to be executed by the CPU 51 and necessary data such as display fonts. The RAM 53 is mainly used as a work area for processing by temporarily storing data which occur in intermediate stages of each processing by the CPU 51 and temporarily stores data which are transferred between the controller 50 and other components.

The EEPROM 54 stores setting parameters which are used to restore the settings as they were before the mobile telephone terminal 3 is powered off. Namely, after the mobile telephone terminal 3 is powered off, the EEPROM 54 is a nonvolatile memory which retains the data as they were before the power off.

The controller 50 is connected to a key operation section 61 via a key I/F (I/F stands for an interface) 61A and a LCD 62 via a LCD controller 62D. The controller 50 is also connected to a ringer 63 and a LED 64 via a ringer driver 63D and a LED driver 64D respectively.

The key operation section 61, the LCD 62, the ringer 63, and the LED 64 transfer information between the mobile telephone terminal 3 and the user. Namely, the controller 50 can accept specification inputs and necessary information inputs from the user via the key operation section 61, notify the user of the state of the mobile telephone terminal 3 for example via the LCD 62, the ringer 63, and the LED 64, and raise the alarm against non-compliant operations.

The following describes the reception system of the mobile telephone terminal 3 of this embodiment. A received signal received at an antenna 31 is supplied to a receiver 33 via an antenna duplexer 32. The receiver 33 performs necessary band limitation and AGC (Automatic Gain Control) on the received signal so that it is kept at an appropriate level and, on the basis of a signal supplied from a frequency synthesizer (local oscillator) 39, keeps the frequency of the received signal to a constant level, supplying the signal thus processed to a baseband processor 34.

The baseband processor 34 converts the signal supplied from the receiver 33 from analog to digital, performs removal of effects such as fading, signal type determination, de-interleave, and error correction on the digital signal, decodes the signal thus processed, and separates the audio data from other communication data. The separated audio data are supplied to a codec 35 having DSP configuration and the other communication data such as various control information, character data, and music data are supplied to the controller 50.

The codec 35 converts the audio data supplied from the baseband processor 34 from digital to analog to form an analog audio signal and supplies it to a speaker 36. Consequently, a voice corresponding to the analog audio signal supplied from the codec 35 is sounded from the speaker 36.

On the other hand, the communication data supplied from the baseband processor 34 to the controller 50 are temporarily stored in the RAM 53 of the controller 50 to be used by the mobile telephone terminal 3 if these data are the control data and character data for use in the mobile telephone terminal 3.

In the present embodiment, the communication data other than the control data and character data for the mobile telephone terminal 3, for example, the music data provided from the content distribution server apparatus 2 via the public switched communication line, are stored in an external memory (external semiconductor memory) 80 which is detachably loaded in the mobile telephone terminal 3 via an external memory I/F 71.

The following describes the transmission system of the mobile telephone terminal 3 of the present embodiment. A microphone 37 converts a picked up voice into an analog audio signal and supplies it to the codec 35. The codec 35 converts the analog audio signal supplied from the microphone 37 from analog to digital to form a digital audio signal and supplies it to the baseband processor 34.

The baseband processor 34 encodes the digital audio signal supplied from the codec 35 by a predetermined encoding algorithm to compress the digital audio signal, divides the compressed signal into predetermined blocks, and supplies them to a transmitter 38. The transmitter 38 converts the digital data supplied from the baseband processor 34 from digital to analog to form an analog modulated signal and, in order to converts this analog modulated signal into a predetermined transmission frequency, mixes this analog modulated signal with a conversion signal supplied from the frequency synthesizer 39 to form a transmission analog modulated signal. The transmission analog modulated signal formed by the transmitter 38 is transmitted from the transmission/reception antenna 31 via the antenna duplexer 32.

When a conversation is made by use of the mobile telephone terminal 3 of the present embodiment and a call is originated therefrom, the user performs an off-hook operation such as pressing an off-hook key of the key operation section 61 and then selects the telephone number of the called party from a telephone number list created in the EEPROM 54 of the mobile telephone terminal 3 by operating a numeric key pad of the key operation section 61. The operation input performed by the user from the key operation section 61 is supplied to the controller 50 via the key I/F 61A.

On the basis of the inputted telephone number or specified telephone number, the controller 50 executes a dialing operation to form a calling request and sends it through the above-mentioned transmission system. Consequently, the mobile telephone terminal 3 is connected to the telephone terminal of the called party. When a response to an incoming call comes from the called party and the connection therewith is acknowledged, the user of the mobile telephone terminal 3 is ready for making a conversation with the called party through the reception and transmission system.

In a call reception standby state, the controller 50 of the mobile telephone terminal 3 monitors for a received signal from the baseband processor 34 at a predetermined interval for example, detecting an incoming signal to the mobile telephone terminal 3. Upon detecting of an incoming signal, the controller 50 controls the ringer driver 63D to drive the ringer 63 to sound a ringing tone (ringer tone), notifying the user of the mobile telephone terminal 3 of the reception of a signal.

When the user of the mobile telephone terminal 3 performs an off-hook operation such as pressing the off-hook key arranged on the key operation section 61 to make a response to an incoming signal, the controller 50 establishes the communication line by transmitting a connection response through the transmission system, upon which the user is ready to make a conversation through the reception and transmission systems.

Thus, originating a call or receiving call, the mobile telephone terminal 3 can establish a communication line to make a conversation. After that, when the other party performed an on-hook operation or the user of the mobile telephone terminal 3 performed an on-hook operation, the communication line is disconnected, upon which the conversation is completed.

The following describes music data recording/reproducing capabilities of the mobile telephone terminal 3, the music data being provided from the content distribution server apparatus 2. In the mobile telephone terminal 3 of the embodiment shown in FIG. 6, the external memory I/F 71, the decoder 41, and a headphone terminal 42 implement the music data recording/reproducing capabilities.

In the present embodiment, the external memory 80 detachably loaded in the mobile telephone terminal 3 serves as a music data recording medium. In the present embodiment, the external memory I/F 71 has a slot in which the external memory 80 is loaded.

In the present embodiment, the external memory I/F 71 has capabilities of a reader/writer (reading/writing device) for recording music data to the loaded external memory 80 and reading music data from the loaded external memory 80.

First, the music data recording capability of the mobile telephone terminal 3 will be described. The mobile telephone terminal 3 of the present embodiment is adapted to call the content distribution server apparatus 2, connect public switched communication line 7 to the content distribution server apparatus 2, and receive the provision (distribution) of desired music data through the home page 2HP arranged by the content distribution server apparatus 2, for example.

The music data provided from the content distribution server apparatus 2 through the public switched communication line are supplied to the controller 50 via the transmission/reception antenna 31, the antenna duplexer 32, the receiver 33, and the baseband processor 34 to be recorded to the external memory 80 through the external memory I/F 71.

Thus, the mobile telephone terminal 3 of the present embodiment receives the provision of music data from the content distribution server apparatus 2 via the public switched communication line 7 and records the provided music data to the external memory 80 connected to the mobile telephone terminal 3 through the external memory I/F 71.

The following describes the music data reproduction capability of the mobile telephone terminal 3. In the mobile telephone terminal 3 of the present embodiment, when the user performs a predetermined operation such as selecting items required for music content reproduction from a predetermined menu for example, the controller 50 reads the music data from the external memory 80 through the external memory I/F 71. Then, the controller 50 supplies the music data to the decoder 41.

The decoder 41 decodes the supplied music data and converts the decoded music data from digital to analog into an analog audio signal. The analog audio signal from the decoder 41 is supplied to the headphone through the headphone terminal 42. Consequently, voice corresponding to the music data read from the external memory 80 can be sounded from the headphone connected to the headphone terminal 42.

It should be noted that, if the external memory 80 stores the music data for plural pieces music, the user of the mobile telephone terminal 3 can select desired piece, which is reproduced in the above-mentioned processes.

### [Processes by music distribution system components]

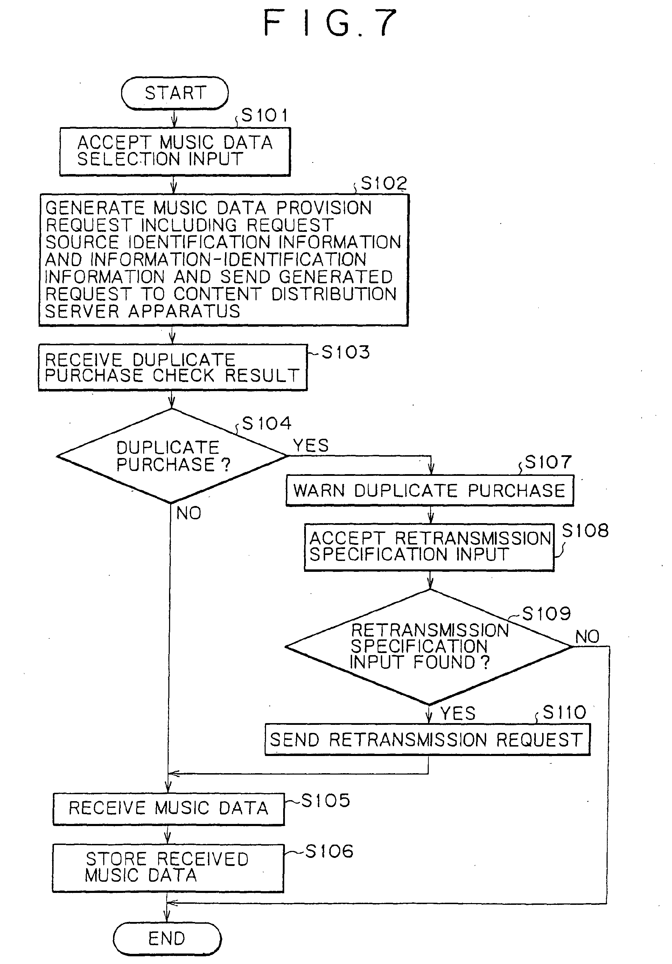

The following describes the processes to be executed by the components of the music distribution system of the first embodiment when the user of the mobile telephone terminal 3 is provided with music distribution, with reference to the flowcharts shown in FIGS. 7 through 9.

### [Processing by mobile telephone terminal 3]

FIG. 7 is a flowchart describing the processing to be executed in the mobile telephone terminal 3 when the user of the mobile telephone terminal 3 receives the provision of music content therethrough. As described before, the processing shown in FIG. 7 is executed after the mobile telephone terminal 3 is connected to the content distribution server apparatus 2 through the public switched communication line by calling the content distribution server apparatus 2 from the mobile telephone terminal 3.

As described, when the public switched communication line 7 is established between the mobile telephone terminal 3 and the content distribution server apparatus 2, the home page 2HP for distributing music data from the content distribution server apparatus 2 to the mobile telephone terminal 3 is provided. The home page 2HP is displayed on the LCD 62 of the mobile telephone terminal 3, which then accepts the selection of music data to be provided from the user trough the key operation section 61 (step S101).

Next, the controller 50 of the mobile telephone terminal 3 generates a music data provision request including request source identification information and music data identification information about the selected music data and transmits the generated request to the content distribution server apparatus 2 through the public switched communication line 7 (step S102). Then, the controller 50 of the mobile telephone terminal 3 waits until a duplicate purchase check result (duplicate purchase decision result) indicative whether the request will cause a duplicate purchase or not is transmitted from the content distribution server apparatus 2. When this result is transmitted, the controller 50 receives it (step S103).

The controller 50 of the mobile telephone terminal 3 determines whether the received duplicate purchase check result is indicative of a duplicate purchase or not (step S104). If the check result is found not causing a duplicate purchase in step S104, the controller 50 receives the requested music data from the content distribution server apparatus 2 (step S105). Then, the controller 50 records the received music data to external memory 80 connected to the mobile telephone terminal 3 (step S106), upon which the processing shown in FIG. 7 comes to an end.

If the purchase request is found to cause a duplicate purchase in step S104, the controller 50 gives the user a warning thereof (step S107). In step S107, the controller 50 controls the LCD controller 62D to display a warning message on the LCD 62 that the music data requested this time were purchased before and therefore the purchase request made this time will cause a duplicate purchase.

The controller 50 controls the ringer driver 63D to drive the ringer 63 to sound a warning tone and controls the LED driver 64D to turn on or flash the LED 64, thereby warning a duplicate purchase. Thus, only two or one of the LCD 62, the ringer 63, and the LED 64 may be used to give the warning without using all of them.

Next, the controller 50 of the mobile telephone terminal 3 is ready to accept a retransmission specification input for requesting the retransmission of the music data which will cause a duplicate purchase (step S108). Then, the controller 50 of the mobile telephone terminal 3 determines whether the retransmission specification input has been made or not (step S109). If the retransmission specification input has been made, the controller 50 forms a retransmission request and sends it to the content distribution server apparatus 2.

This retransmission request includes information indicative that this request is for retransmission, request source identification information, and music data identification information. When the retransmission request comes, the content distribution server apparatus 2 sends the requested music data which will cause a duplicate purchase, so that the mobile telephone terminal 3 receives the supplied music data (step S105) and stores the received music data into the external memory 80 (step S106).

In the decision process of step S109, if the retransmission specification input has not been made by the user's performing an operation to end the receiving of music data distribution for example, the controller 50 of the mobile telephone terminal 3 ends the processing shown in FIG. 7.

### [Processing by content distribution server apparatus 2]

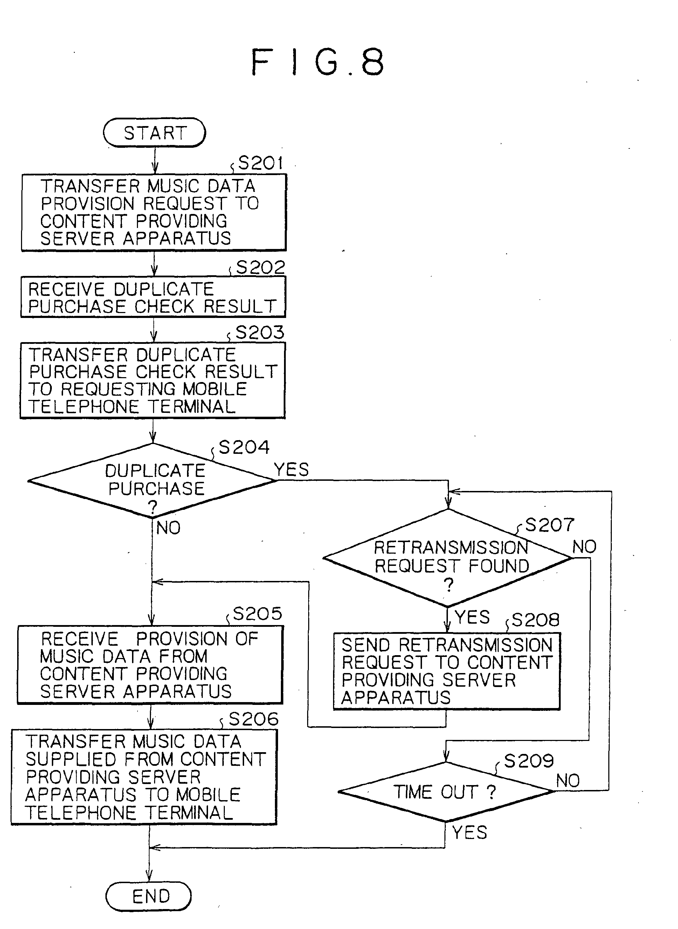

The following describes the processing by the content distribution server apparatus 2 which has accepted a music data provision request from the mobile telephone terminal 3. FIG. 8 is a flowchart describing the processing to be executed in the content distribution server apparatus 2. The processing shown in FIG. 8 starts when the public switched communication line is established between the mobile telephone terminal 3 and the content distribution server apparatus 2 and the content distribution server apparatus 2 receives a music data provision request from the mobile telephone terminal 3 as described above.

Receiving the music data provision request from the mobile telephone terminal 3 via the public switched communication line 7, the controller 21 of the content distribution server apparatus 2 transfers the received provision request to the content providing server apparatus 1 via the dedicated communication line 6 (step S201). Then, the controller 21 of the content distribution server apparatus 2 receives a duplicate purchase check result from the content providing server apparatus 1 via the dedicated communication line 6 (step S202) and transfers the received duplicate purchase check result to the mobile telephone terminal 3 via the public switched communication line 7 (step S203).

The controller 21 of the content distribution server apparatus 2 determines whether the duplicate purchase check result received in step S202 indicates a duplicate purchase or not (step S204). If the check result is found not indicating a duplicate purchase, then the controller 21 receives the provision of the music data requested from the mobile telephone terminal 3 (step S205) and transfers the received music data to the requesting mobile telephone terminal 3 (step S206).

If the check result is found indicating a duplicate purchase in the decision of step S204, then the controller 21 of the content distribution server apparatus 2 determines whether the retransmission request from the mobile telephone terminal 3 has been received or not (step S207). If the retransmission request is found received, the controller 21 sends the received retransmission request to the content providing server apparatus 1 via the dedicated communication line 6 (step S208).

Then, the controller 21 receives the provision of the music data requested for retransmission by the mobile telephone terminal 3 from the content providing server apparatus 1 (step S205) and transfers the received music data to the requesting mobile telephone terminal 3 (step S206).

If the retransmission request is found not received from the mobile telephone terminal 3 in the decision of step S207, then the controller 21 determines whether a predetermined time has passed or not, namely a time-out has occurred (step S209) or not. If the time-out has not yet been reached, the controller 21 repeats the processes from step S207.

If the time-out is found reached in the decision of step S209, then the controller 21 ends the processing shown in FIG. 8 without distributing the requested music data to the requesting mobile telephone terminal 3.

### [Processing by content providing server apparatus 1]

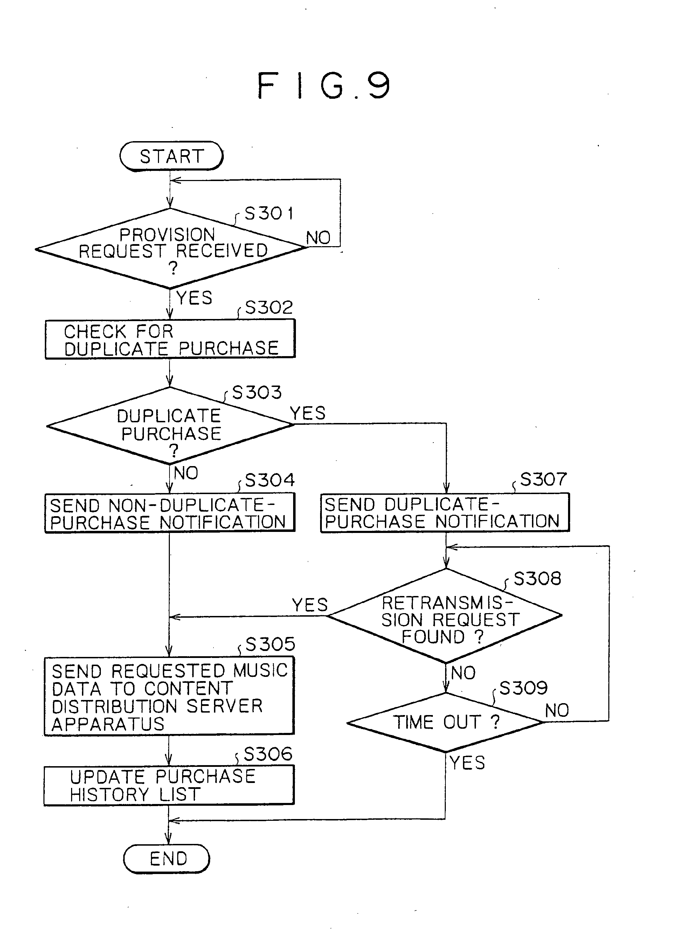

The following describes the processing to be executed in the content providing server apparatus 1. FIG. 9 is a flowchart describing the processing to be executed in the content providing server apparatus 1. The processing shown in FIG. 9 is always executed in the content providing server apparatus 1.

The content providing server apparatus 1 monitors whether a music data provision request by the mobile telephone terminal 3 supplied from the content distribution server apparatus 2 has been received or not (step S301). If the music data provision request is found received, then, on the basis of the request source identification information and music data identification information included in the received provision request, the content providing server apparatus 1 references the purchase history list described with reference to FIG. 4 to determine whether the provision of the requested music data will cause a duplicate provision, namely a duplicate purchase for the user of the requesting source (step S302).

Then, the controller 11 of the content providing server apparatus 1 determines as a result of the checking whether a duplicate purchase will occur (step S303). If no duplicate purchase is found to occur in the decision of step S303, the controller 11 of the content providing server apparatus 1 sends a duplicate purchase check result indicating that no duplicate purchase will occur to the content distribution server apparatus 2 via the dedicated communication line 6 (step S304).

The controller 11 of the content providing server apparatus 1 reads the requested music data from the hard disk 13 and sends the music data to the content distribution server apparatus 2 via the dedicated communication line 6 (step S305). Then, the controller 11 of the content providing server apparatus 1 adds the purchase history information comprising the request source identification information and music data identification information included in the provision request processed this time to the purchase history list in the hard disk 15 (step S306), upon which the processing shown in FIG. 9 ends.

If the requested provision is found to cause a duplicate provision in the decision of step S303, the controller 11 of the content providing server apparatus 1 sends a duplicate purchase check result indicative of a duplicate purchase to the content distribution server apparatus 2 via the dedicated communication line 6 (step S307).

Then, the controller 11 of the content providing server apparatus 1 determines whether a retransmission request by the mobile telephone terminal 3 sent via the content distribution server apparatus 2 has been received or not (step S308). If the retransmission request is found not received in the decision of step S308, then the controller 11 determines whether a predetermined time has passed or not, namely a time-out has occurred (step S309) or not.

If the time-out has not yet been reached in the decision of step S309, the controller 11 repeats the processes from step S308 and waits until a retransmission request comes. If the time-out has been reached in the decision of step S309, it indicates that no retransmission has been received, so that the controller 11 ends the processing shown in FIG. 9 without transmitting the requested music data.

If the retransmission is found received in the decision of step S308, the controller 11 of the content providing server apparatus 1 reads the requested music data from the hard disk 13 and sends the music data to the content distribution server apparatus 2 via the dedicated communication line 6 (step S305).

Then, the controller 11 of the content providing server apparatus 1 references the purchase history list in the hard disk 15 by use of the request source identification information and music data identification information included in the retransmission request and increments the purchase count of the music data by one to update the purchase history list (step S306), upon which the processing shown in FIG. 9 ends.

Thus, in the first embodiment, when requested music data are provided if it will not cause a duplicate purchase, the purchase history information is additionally recorded in step S306. If a duplicate purchase will be caused and the requested music data have been provided in response to its retransmission request, the purchase count of these music data in the purchase history list is incremented in step S306.

In the music distribution system of the first embodiment, in response to a request from the mobile telephone terminal 3, the content distribution server apparatus 2 is supplied with the requested music data from the content providing server apparatus 1, supplying the music data to the requesting mobile telephone terminal 3.

At this moment, on the basis of the purchase history list held in the content providing server apparatus 1, the duplicate purchase of the same music data is checked. If a duplicate purchase is determined, the mobile telephone terminal 3 is notified thereof via the content distribution server apparatus 2, notifying the user of the mobile telephone terminal 3. Therefore the user can effectively prevent the duplicate purchase of the same music data.

The first embodiment also allows the user to purchase music data which will cause a duplicate purchase, thereby handling any repurchase requests from the user of the mobile telephone terminal 3 with flexibility. In addition, the purchase history list held in the content providing server apparatus 1 has an area for recording the information indicative of a purchase count, so that use of the purchase count can notify the user of the mobile telephone terminal 3 of the past purchase count in the case of duplicate purchase.

### [Second preferred embodiment]

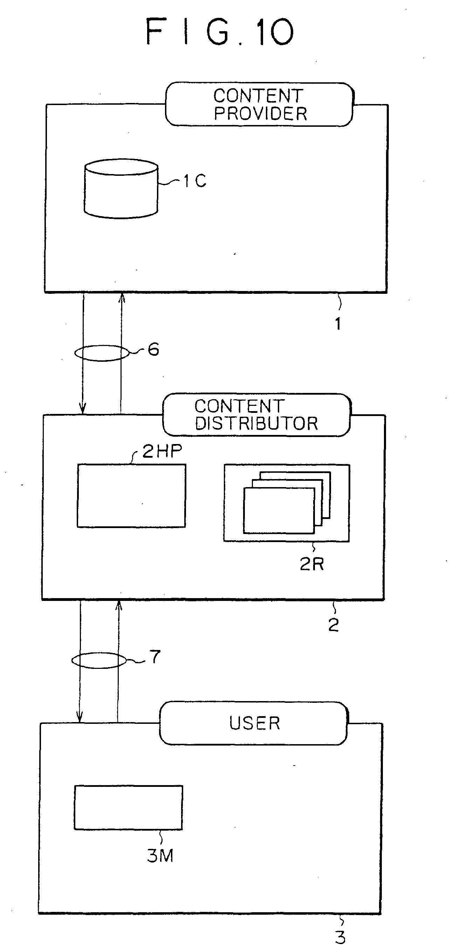

FIG. 10 shows an information distribution system of a second embodiment according to the invention applied to the music distribution system described with reference to FIG. 1. The music distribution system of the second embodiment is obtained by applying one embodiment of an information distribution method according to the invention.

The music distribution system of the second embodiment also comprises a content providing server apparatus, a content distribution server apparatus, and a mobile telephone terminal which are configured in generally the same manner as the content providing server apparatus 1, the content distribution server apparatus 2, and the mobile telephone terminal 3 used by a user of the first embodiment.

Hence, the music distribution system of the second embodiment will also be described as having the content providing server apparatus 1, the content distribution server apparatus 2, and the mobile telephone terminal 3 of the first embodiment.

However, in the second embodiment, the purchase history list, which is the purchase history information for each user of the previously purchased music data, is not held in the content providing server apparatus 1. As shown in FIG. 10, the purchase history list is stored in a purchase history list storage section 2R of the content distribution server apparatus 2.

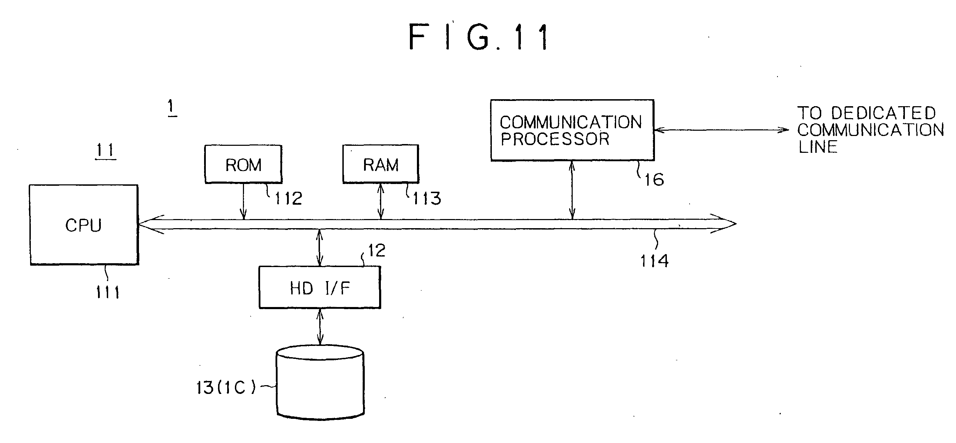

FIG. 11 is a block diagram illustrating the content providing server apparatus 1 of the second embodiment. As seen from FIG. 11, the content providing server apparatus 1 of the second embodiment has neither the hard disk 15 for holding the purchase history list nor the HD I/F 14 of the first embodiment. Except this point, the content providing server apparatus 1 of the second embodiment is the same in configuration as that of the first embodiment.

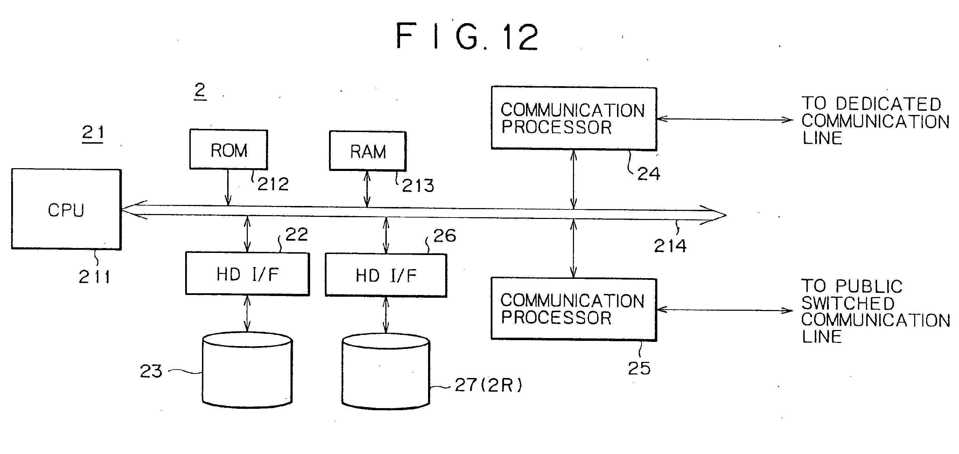

FIG. 12 is a block diagram illustrating the content distribution server apparatus 2 of the second embodiment. As seen from FIG. 12, the content distribution server apparatus 2 of the second embodiment has a hard disk 27 for holding the purchase history list and a HD I/F 26. Except this point, the content distribution server apparatus 2 of the second embodiment is the same in configuration as that of the first embodiment.

It should be noted that, in the second embodiment, the purchase history list to be created in the hard disk 27 of the content distribution server apparatus 2 is the same as that created in the hard disk 15 of the content providing server apparatus 1 of the first embodiment described with reference to FIG. 4.

The mobile telephone terminal 3 is the same in configuration as the mobile telephone terminal 3 of the first embodiment described with reference to FIG. 6. Thus, except for the location of the purchase history list, the music distribution system of the second embodiment is the same in configuration with that of the first embodiment.

Hence, except for the HD I/F 26 and the hard disk 27 added to the content distribution server apparatus 2, the components similar to those previously described in association with the first embodiment are denoted by the same reference characters and need not be described again.

Also in the music distribution system of the second embodiment shown in FIG. 10, the transmission of a music data provision request from the mobile telephone terminal 3 to the content distribution server apparatus 2 causes the requested music data to be supplied from the content distribution server apparatus 2 to the mobile telephone terminal 3. In this case, in the second embodiment too, every music data provision request to be transmitted from the mobile telephone terminal 3 to the content distribution server apparatus 2 includes request source identification information and music data identification information as with the provision request used in the first embodiment.

In the music distribution system of the second embodiment, the content distribution server apparatus 2 which has received a music data provision request from the mobile telephone terminal 3 references the purchase history list held in the content distribution server apparatus 2 to check for a duplicate purchase, sending the check result to the mobile telephone terminal 3.

Consequently, the processing to be executed in the content distribution server apparatus 2 and the content providing server apparatus 1 differs from that of the first embodiment-. The following describes the processing to be executed by each component unit at the time of music data distribution in the music distribution system of the second embodiment.

It should be noted that, in the second embodiment, the processing of the mobile telephone terminal 3 for receiving the distribution of music data is the same as that of the first embodiment described with reference to FIG. 7. Hence, in what follows, only the processing to be executed in the content distribution server apparatus 2 and the processing to be executed in the content providing server apparatus 1 will be described.

### [Processing by content distribution server apparatus 2]

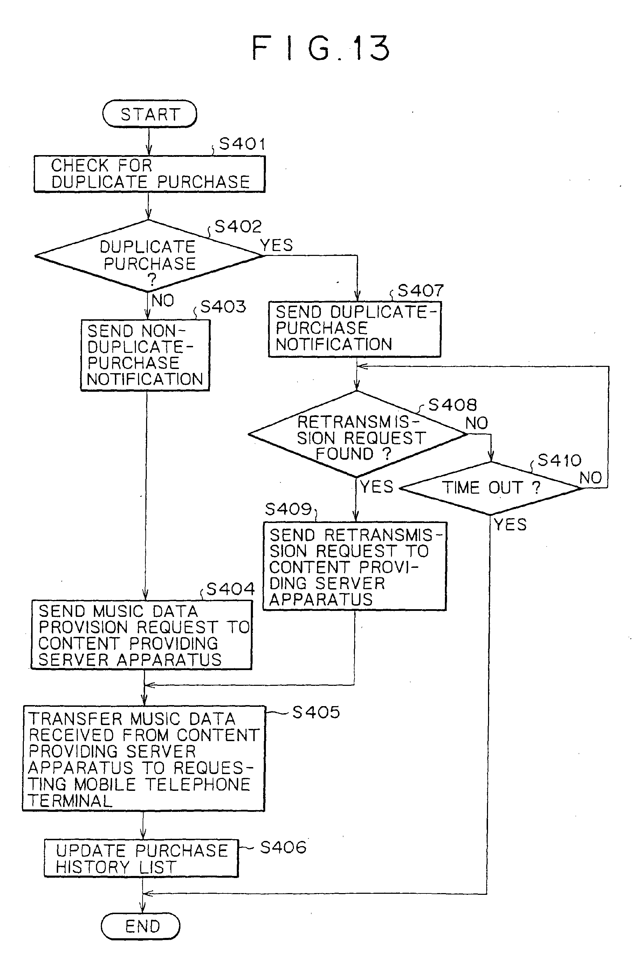

First, the processing to be executed by the content distribution server apparatus 2 when it receives a music data provision request from the mobile telephone terminal 3 will be described. FIG. 13 is a flowchart describing the processing to be executed in the content distribution server apparatus 2. The processing shown in FIG. 13 starts when a music data provision request is supplied from the mobile telephone terminal 3 via a public switched communication line established in between, as described before.

Receiving a music data provision request from the mobile telephone terminal 3 via a public switched communication line 7, a controller 21 of the content distribution server apparatus 2 references a purchase history list formed on the hard disk 27 in the content distribution server apparatus 2 on the basis of the request source identification information and music data identification information included in the received provision request to determine whether the provision of the requested music data will cause a duplication provision, namely a duplicate purchase for the requesting user or not (step S401).

The controller 21 of the content distribution server apparatus 2 determines, as a result of the checking, whether the requested music data will cause a duplicate purchase or not (step S402). If no duplicate purchase will occur in the decision of step S402, the controller 21 of the content distribution server apparatus 2 sends a duplicate purchase check result indicative that no duplicate purchase will occur to the mobile telephone terminal 3 via the public switched communication line 7 (step S403).

Then, the controller 21 of the content distribution server apparatus 2 sends the music data provision request according to the request made by the mobile telephone terminal 3 to the content providing server apparatus 1 (step S404). In response to this music data provision request, the content providing server apparatus 1 supplies the requested music data to the content distribution server apparatus 2 via a dedicated communication line 6.

Receiving the music data from the content providing server apparatus 1, the content distribution server apparatus 2 transfers the received music data to the mobile telephone terminal 3 via the public switched communication line 7 (step S405). Then, the controller 21 of the content distribution server apparatus 2 adds the purchase history information consisting of the request source identification information and music data identification information of the provision request processed this time to the purchase history list stored in the hard disk 27 (step S406), upon which the processing shown in FIG. 13 ends.

If the provision of the requested music data will cause a duplicate purchase in the decision of step S402, the controller 21 of the content distribution server apparatus 2 sends a duplicate purchase check result indicative that a duplicate purchase will occur to the mobile telephone terminal 3 via the public switched communication line 7 (step S407). Consequently, the mobile telephone terminal 3 notifies its user of that the requested music data were provided before.

The controller 21 of the content distribution server apparatus 2 determines whether a retransmission request has been received from the mobile telephone terminal 3 (step S408). If no retransmission request is found received in the decision of step S408, then the controller 21 determines whether a predetermined time has passed, namely a time-out has been reached or not (step S410).

If the time-out is found not reached in the decision of step S410, then the controller 21 repeats the processes from step S408 and waits until a retransmission request comes. If the time-out is found reached in the decision of step S410, it indicates that no retransmission request has been received, so that the controller 21 ends the processing shown in FIG. 13 without sending music data.

If a retransmission request is found received in the decision of step S408, the controller 21 of the content distribution server apparatus 2 sends the received retransmission request to content providing server apparatus 1 via the dedicated communication line 6 (step S409). In response to the received retransmission request, the content providing server apparatus 1 sends the music data, which is a retransmission, to the content distribution server apparatus 2. The content distribution server apparatus 2 sends the received music data to the mobile telephone terminal 3 (step S405).

Then, the controller 21 of the content distribution server apparatus 2 references the purchase history list stored in the hard disk 27 on the basis of the request source identification information and music data identification information included in the retransmission request to increment the purchase count of the music data requested this time by one, updating the purchase history list (step S406), upon which the processing shown in FIG. 13 ends.

Thus, in the second embodiment, as with the first embodiment, if music data are provided, which will not cause a duplicate purchase, additional recording is made on the purchase history information in step S406 and, if the provision of the requested music data will cause a duplicate purchase but the music data are provided in accordance with the retransmission request, the purchase count in the purchase history list of the music data requested this time is updated in step S406.

In the music distribution system of the second embodiment, in response to the request from the mobile telephone terminal 3, the content distribution server apparatus 2 receives the provision of the requested music data from the content providing server apparatus 1 and sends the received music data to the mobile telephone terminal 3.

### [Processing by content providing server apparatus 1]

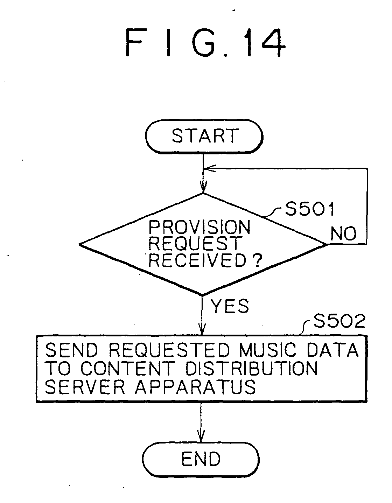

The following describes the processing to be executed in the content providing server apparatus 1. FIG. 14 is a flowchart describing the processing to be executed in the content providing server apparatus 1. The processing shown in FIG. 14 is always executed in the content providing server apparatus 1.

The content providing server apparatus 1 monitors whether a music data provision request made by the mobile telephone terminal 3 transmitted from the content distribution server apparatus 2 has been received or not (step S501). If the music data provision request is found received, the controller 11 reads the requested music data from the disk 13 on the basis of the request source identification information and music data identification information included in the received music data provision request and sends the music data to the content distribution server apparatus 2 via the dedicated communication line 6 (step S502), upon which the processing shown in FIG. 14 ends.

Thus, in the second embodiment, the content providing server apparatus 1 is used as supplying, to the content distribution server apparatus 2, the music data corresponding to the request supplied therefrom. Duplicate purchase checking is executed in the content distribution server apparatus 2.

Therefore, in the second embodiment, the duplicate purchase of music data is checked on the basis of the purchase history list held in the content distribution server apparatus 2. If the music data requested this time by the user is found causing a duplicate purchase, the mobile telephone terminal 3 is notified of the duplicate purchase by the content distribution server apparatus 2, so that the user of the mobile telephone terminal 3 can prevent the duplicate purchase of the same music data.

In the second embodiment, a duplicate purchase is also permitted if the user wants it, so that any purchase request by the user can be met with flexibility. In addition, the purchase history list held in the content distribution server apparatus 2 has an area for recording the information indicative of a purchase count, so that use of the purchase count can notify the user of the mobile telephone terminal 3 of the past purchase count in the case of duplicate purchase.

### [Third preferred embodiment]

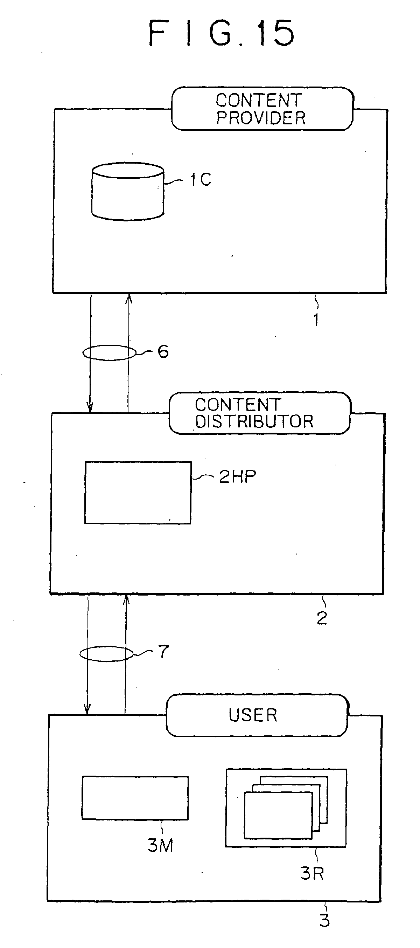

FIG. 15 illustrates an information distribution system of a third embodiment according to the invention applied to the music distribution system described with reference to FIG. 1. The music distribution system of the third embodiment is obtained by applying one embodiment of a duplicate distribution preventing method according to the invention.

The music distribution system of the third embodiment also comprises a content providing server apparatus, a content distribution server apparatus, and a mobile telephone terminal which are configured in generally the same manner as the content providing server apparatus 1, the content distribution server apparatus 2, and the mobile telephone terminal 3 used by a user of the first embodiment.

Hence, the music distribution system of the third embodiment will also be described as having the content providing server apparatus 1, the content distribution server apparatus 2, and the mobile telephone terminal 3 of the first embodiment.

However, in the third embodiment, the music data purchase history is managed in the mobile telephone terminal 3. As shown in FIG. 15, the purchase history list is held in a purchase history storage section 3R of the mobile telephone terminal 3.

The content providing server apparatus 1 of the third embodiment is the same in configuration as the content providing server apparatus 1 of the second embodiment described with reference to FIG. 11. The content distribution server apparatus 2 of the third embodiment is the same in configuration as the content distribution server apparatus 2 of the first embodiment described with reference to FIG. 5. Namely, in the third embodiment, neither the content providing server apparatus 1 nor the content distribution server apparatus 2 has the purchase history list.

The mobile telephone terminal 3 of the third embodiment is similar in configuration as the mobile telephone terminal 3 of the first and second embodiments. However, the mobile telephone terminal 3 of the third embodiment accumulates the past purchase information in its EEPROM 54 to form a purchase history list.

In this case, the purchase history list formed in the EEPROM 54 of the mobile telephone terminal 3 is for only the mobile telephone terminal 3, so that, unlike the first and second embodiments, each music data purchase request has no request source identification information; it has only music data identification information.

In the case of the music distribution system of the third embodiment, when the user of the mobile telephone terminal 3 operates it so that it receives the distribution of the requested music data, the mobile telephone terminal 3 checks for a duplicate purchase. If the requested music data are found to cause a duplicate purchase, the user is promptly notified thereof to prevent the duplicate purchase from happening.

Hence, the processing to be executed in the mobile telephone terminal 3 differs from those of the first and second embodiments. Further, in the processing to be executed in the content providing server apparatus 1 and the content distribution server apparatus 2, no duplicate purchase checking is executed; only the processing for providing the requested music data is executed in response to each music data provision request from the mobile telephone terminal 3.

### [Processing by mobile telephone terminal 3]

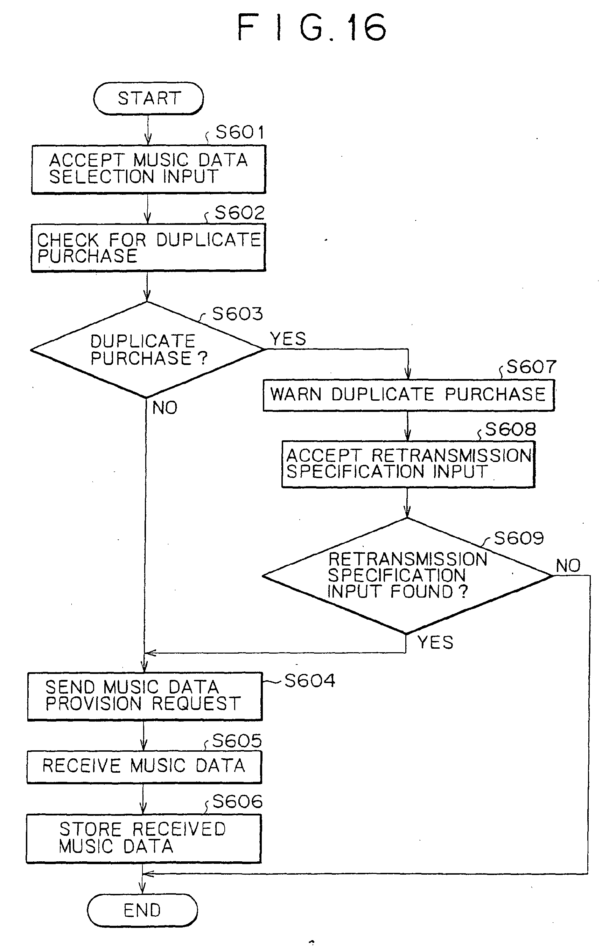

The following describes the processing to be executed by the mobile telephone terminal 3 of the third embodiment. FIG. 16 is a flowchart describing the processing to be executed in the mobile telephone terminal 3 when the user of the mobile telephone terminal 3 receives the provision of music data by means of the mobile telephone terminal 3.

In the third embodiment, the processing shown in FIG. 16 also starts when the mobile telephone terminal 3 calls the content distribution server apparatus 2 to establish a public switched communication line between the mobile telephone terminal 3 and the content distribution server apparatus 2.

As described above, when the public switched communication line 7 is established between the mobile telephone terminal 3 and the content distribution server apparatus 2, the content distribution server apparatus 2 provides a home page 2HP for distributing requested music data to the mobile telephone terminal 3. The mobile telephone terminal 3 displays the provided home page 2HP on its LCD 62 and accepts a music data selection input by the user from its key operation section 61 (step S601).

Then, a controller 50 of the mobile telephone terminal 3 references a purchase history list stored in its EEPROM 54 on the basis of the music data identification information for the selected music data to check to see if the music data to be requested this time will cause a duplicate purchase or not (step S602).

The controller 50 determines whether a check result obtained in step S602 indicates a duplicate purchase or not (step S603). If the check result does not indicate a duplicate purchase, the controller 50 generates a music data provision request including request source identification information and music data identification information and sends the generated request to content distribution server apparatus 2 via the public switched communication line 7 (step S604).

The music data provision request is sent to the content distribution server apparatus 2 via the public switched communication line 7 as shown in FIG. 15 and then transferred to the content providing server apparatus 1 via a dedicated communication line 6. On the basis of the received music data provision request, the content providing server apparatus 1 reads the requested music data from a hard disk 13 and supplies the music data to the content distribution server apparatus 2 via the dedicated communication line 6. Then, the content distribution server apparatus 2 supplies the received music data to the mobile telephone terminal 3 via the public switched communication line 7.

Thus, the requested music data are supplied from the content distribution server apparatus 2 to the requesting mobile telephone terminal 3, so that the mobile telephone terminal 3 receives the music data (step S605) and stores the same into an external memory 80 via an external memory I/F 71 (step S606), upon which the processing shown in FIG. 16 ends.

If the provision of the requested music data is found causing a duplicate purchase in the decision of step S603, the controller 50 gives a warning by means of the LCD 62, the ringer 63, and the LED 64 that the provision of the requested music data will cause a duplicate purchase (step S607) as with the first and second embodiments.

Then, the controller 50 of the mobile telephone terminal 3 is ready to accept a retransmission specification input specifying the retransmission of the music data which will cause a duplicate purchase (step S608). Next, the controller 50 of the mobile telephone terminal 3 determines whether a retransmission specification input has been inputted by the user (step S609).

If the retransmission specification input is found in the decision of step S609, the controller 50 executes the processes from step S604 to form a music data provision request and sends it to the content distribution server apparatus 2 to receive therefrom the requested music data which will cause a duplicate purchase. If no retransmission specification input is found in the decision of step S609, the controller 50 determines that no retransmission specification input has been inputted by the user, upon which the processing shown in FIG. 16 ends.

Thus, in the third embodiment, the duplicate purchase checking is executed in the mobile telephone terminal 3, so that the user can be promptly notified of a duplicate purchase or not. In the case of a duplicate purchase, the mobile telephone terminal 3 can promptly determine whether the requested music data will surely cause a duplicate purchase or the requested music data should be provided despite a duplicate purchase.

As described, in the third embodiment, the public switched communication line 7 is established between the mobile telephone terminal 3 and the content distribution server apparatus 2 and, after the provision of the home page 2HP for music data distribution, a music data selection input is accepted and the duplicate purchase checking is executed.

The present invention is not limited to this configuration. For example, the content providing server apparatus 1 may provide a catalog including the music data identification information about distributable music data to the user via the content distribution server apparatus 2 or the user may download the music data identification information about distributable music data such as this month's new music release for example through the mobile telephone terminal 3 in advance.

In the above-mentioned example, a music data selection input may be accepted before establishing a public switched communication line between the mobile telephone terminal 3 and the content distribution server apparatus 2, thereby executing the duplicate purchase checking. In this case, the duplicate purchase checking can be executed at the mobile telephone terminal 3 without involving communication cost.

The storage capacity of the EEPROM 54 of the mobile telephone terminal 3 is limited. Therefore, to make the most of the EEPROM 54 or if it is impossible to install an EEPROM of a large enough capacity, the duplicate purchase checking may be executed in the content providing server apparatus 1 or the content distribution server apparatus 2 as with the first and second embodiments, thereby preventing a duplicate purchase with reliability.

In the above-mentioned embodiments, only one mobile telephone terminal 3 is described. It will be apparent to those skilled in the art that the present invention can support plural mobile telephone terminals 3 which can receive the distribution of music data from the content distribution server apparatus.

The number of content providing server apparatuses is not limited to one. Plural content providing server apparatuses may be arranged for plural record companies for example, from which music data are supplied to the content distribution server apparatus.

In the above-mentioned embodiments, the purchase history list is composed of request source identification information, music data identification information, purchase count, and other information. It will be apparent to those skilled in the art the purchase history list may include another lineup of information. For example, the purchase history list may exclude purchase count and other information.

Conversely, the purchase history list may include various necessary information such as the title and artist names of music provided as music data for example. These pieces of information are then supplied to the mobile telephone terminal of each user.

In the above-mentioned embodiments, if the music data requested for provision will cause a duplicate purchase from the standpoint of the user of the mobile telephone terminal 3, the user is notified thereof. The present invention also can notify the user that the provision of the requested data will not cause a duplicate purchase.

In the above-mentioned embodiments, the music data are distributed in units of piece of music. It will be apparent to those skilled in the art that music data can also be distributed in a predetermined unit of plural pieces of music such as a so-called music album in which plural pieces of music are collected for example.

Content to be distributed is not limited to music data. For example, distributable content includes a combination of motion picture data and audio data like movies, text data like novels, and still picture data like photographs. Namely, the present invention can be applied to information distribution systems which can distribute various kinds of content.

In the above-mentioned embodiments, the user accepts the distribution of content by means of a mobile telephone terminal. It will be apparent to those skilled in the art that the present invention is also applicable to any configuration in which the distribution content is accepted by the user by means of a personal computer installed in a home, a combination of a laptop personal computer and a mobile telephone terminal, and other various communication terminals via a communication line.

The present invention is also applicable to a configuration in which content is distributed from a content providing server apparatus over the Internet. For example, a communication terminal of a user is connected to a predetermined ISP (Internet Service Provider) via a communication line to access a desired content distribution server apparatus through this ISP and the Internet, downloading desired content from the content distribution server apparatus.

In this example, content to be distributed may be held in the content distribution server apparatus or the content distribution server apparatus may acquire content from other servers via a communication network such as the Internet to distribute the acquired content.

In this example, duplicate purchases can be securely avoided by performing duplicate purchase checking in the content distribution server apparatus, a server apparatus from which content is supplied to the content distribution server apparatus, or each user's communication terminal.

In the above-mentioned embodiments, the content distribution server apparatus 2 receives the content requested by the user from the content providing server apparatus 1. It will be apparent to those skilled in the art that the content distribution server apparatus 2 may receive and accumulate a lot of distributable content therein and distribute it upon request, thereby speeding up content distribution.

If the content providing server apparatus or the content distribution server apparatus manages the purchase history information, the server apparatus may analyze it to obtain the tendency of popular content and distribute content accordingly. In addition, popular content may be graded to provide the ranking to users, thereby launching new content provision services.

## Claims

1. An information distribution method comprising:
a provision request transmission step for transmitting, from a communication terminal to an information distribution apparatus, an information provision request including a request source identification information and information-identification information for information to be provided;
in said information distribution apparatus, on the basis of said information provision request from said communication terminal, a duplicate provision decision step for referencing a list containing the request source identification information about a request source to which information has been supplied before and the information-identification information about the information supplied to said request source to determine whether the provision of information requested this time to said request source is the duplicate provision;
a decision result transmission step for transmitting a result of the decision made in said duplicate provision decision step from said information distribution apparatus to said communication terminal; and
in said communication terminal, a notification step for notifying a user of said communication terminal of said decision result if said decision result supplied from said information distribution apparatus is at least indicative of the duplicate provision of said requested information.

2. The information distribution method according to claim 1, further comprising:
if the provision of said requested information is found not duplicate in said duplicate provision decision step of said information distribution apparatus, an information transmission step for transmitting the information requested by said information provision request from said information distribution apparatus to said communication terminal as a request source; and
in said information distribution apparatus, a provision history adding step for adding said request source identification information about said information provision request and said information-identification information.

3. The information distribution method according to claim 1 or 2, further comprising:
after that the provision of said requested information is a duplicate provision has been notified in said notification step in said communication terminal, a retransmission specification input acceptance step for accepting a retransmission specification input for directing a request for the retransmission of said requested information;
if said retransmission specification input has been accepted in said retransmission specification input acceptance step in said communication terminal, a retransmission request transmission step for transmitting the retransmission request for said requested information from said communication terminal to said information distribution apparatus; and
if said information distribution apparatus has received said retransmission request from said communication terminal, a retransmission information transmission step for transmitting said requested information requested for retransmission from said information distribution apparatus to said communication terminal as a request source.

4. The information distribution method according to claim 1, 2 or 3 wherein
said information distribution apparatus comprises an information providing server apparatus and an information distribution server apparatus interconnected by a communication line, said information providing server apparatus supplying information to be distributed to said information distribution server apparatus, said information distribution server apparatus supplying information requested from said communication terminal; and
said list is arranged in said information providing server apparatus.

5. An information distribution system in which a communication terminal receives information distributed from an information distribution apparatus via a communication line,
said communication terminal comprising:
information provision request transmission means for transmitting an information provision request including request source identification information and information-identification information about information to be provided to said information distribution apparatus via said communication line;
decision result reception means for receiving a decision result from said information distribution apparatus, said decision result indicating whether the provision of the requested information is duplicate; and
if said decision result received from said decision result reception means indicates that at least the provision of the requested information is duplicate, notification means for notifying a user of said communication terminal of said decision result; and
said information distribution apparatus comprising:
list holding means for holding a list containing said request source identification information about a request source to which information has been supplied before and said information-identification information about the information supplied to said request source;
information provision request reception means for receiving said information provision request sent from said communication terminal via said communication line;
duplicate provision decision means for referencing, on the basis of said information provision request received by said information provision request reception means, said list held in said list holding means to determine whether the provision of information requested this time to said request source is the duplicate provision; and
decision result transmission means for transmitting a result of the decision made by said duplicate provision decision means from said information distribution apparatus to said communication terminal.

6. The information distribution system according to claim 5, wherein said information distribution apparatus further comprises: if the provision of said requested information is not found duplicate by said duplicate provision decision means, information transmission means for transmitting the information requested by said information provision request, from said information distribution apparatus to said communication terminal from which said requested information has been transmitted; and if the requested information has been transmitted by said information transmission means, provision history adding means for adding said request source identification information about said information provision request and said information-identification information to said list held in said list holding means.

7. The information distribution system according to claim 5 or 6, wherein
said communication terminal comprises:
after that the provision of said requested information is a duplicate provision has been notified by said notification means, retransmission specification input acceptance means for accepting a retransmission specification input for directing a request for the retransmission of said requested information; and
if said retransmission specification input has been accepted by said retransmission specification input acceptance means, retransmission request transmission means for transmitting the retransmission request for said requested information to said information distribution apparatus; and
said information distribution apparatus comprises:
if said retransmission request has been received from said communication terminal, retransmission information transmission means for transmitting the information requested for retransmission to said communication terminal.

8. The information distribution system according to claim 5, 6 or 7 wherein
said information distribution apparatus comprises an information providing server apparatus and an information distribution server apparatus interconnected by a communication line, said information providing server apparatus supplying information to be distributed to said information distribution server apparatus, said information distribution server apparatus supplying requested information to said communication terminal; and
said list holding means for holding said list is arranged in said information providing server apparatus.

9. The information distribution system according to claim 5, 6 or 7 wherein
said information distribution apparatus comprises an information providing server apparatus and an information distribution server apparatus interconnected by a communication line, said information providing server apparatus supplying information to be distributed to said information distribution server apparatus, said information distribution server apparatus supplying requested information to said communication terminal; and
said list holding means for holding said list is arranged in said information distribution server apparatus.

10. A communication terminal which is provided with information from an information distribution apparatus via a communication line, comprising:
information provision request transmission means for transmitting an information provision request including request source identification information and information-identification information about information to be provided to said information distribution apparatus via said communication line;
decision result reception means for receiving a decision result from said information distribution apparatus, said decision result indicating whether the provision of the requested information is duplicate; and
if said decision result received from said decision result reception means indicates that at least the provision of the requested information is duplicate, notification means for notifying a user of said communication terminal of said decision result.

11. The communication terminal according to claim 10, further comprising:
after that the provision of said requested information is duplicate has been notified by said notification means, retransmission specification input acceptance means for accepting a retransmission specification input for directing a request for the retransmission of said requested information; and
if said retransmission specification input has been accepted by said retransmission specification input acceptance means, retransmission request transmission means for transmitting the retransmission request for said requested information to said information distribution apparatus.

12. An information distribution apparatus for distributing information in response to an information provision request received from a communication terminal via a communication line, comprising:
list holding means for holding a list containing said request source identification information about a request source to which information has been supplied before and said information-identification information about the information supplied to said request source;
information provision request reception means for receiving said information provision request sent from said communication terminal via said communication line;
duplicate provision decision means for referencing, on the basis of said information provision request received by said information provision request reception means, said list held in said list holding means to determine whether the provision of information requested this time to said request source is duplicate; and
decision result transmission means for transmitting a result of the decision made by said duplicate provision decision means from said information distribution apparatus to said communication terminal.

13. The information distribution apparatus according to claim 12, further comprising:
if the provision of said requested information is not found duplicate by said duplicate provision decision means, information transmission means for transmitting the information requested by said information provision request, from said information distribution apparatus to said communication terminal via said communication line; and
if the requested information has been transmitted by said information transmission means, provision history adding means for adding said request source identification information about said information provision request and said information-identification information to said list held in said list holding means.

14. The information distribution apparatus according to claim 12, further comprising:
if a retransmission request has been received from said communication terminal as the duplicate provision, retransmission information transmission means for transmitting the information requested for retransmission to said communication terminal.

15. The information distribution apparatus according to claim 12 or 13, further comprising:
an information providing server apparatus and an information distribution server apparatus interconnected by a communication line, said information providing server apparatus supplying information to be distributed to said information distribution server apparatus, said information distribution server apparatus supplying requested information to said communication terminal; and
said list holding means for holding said list being arranged in said information providing server apparatus.

16. The information distribution apparatus according to claim 12 or 13, further comprising:
an information providing server apparatus and an information distribution server apparatus interconnected by a communication line, said information providing server apparatus supplying information to be distributed to said information distribution server apparatus, said information distribution server apparatus supplying requested information to said communication terminal; and
said list holding means for holding said list being arranged in said information distribution server apparatus.

17. A duplicate distribution preventing method for preventing duplicate distribution, to a communication terminal, of information to be supplied from an information distribution apparatus in response to a request for said information from said communication terminal, said duplicate distribution preventing method being executed in said communication terminal, comprising:
a specification input acceptance step for accepting a specification input for requesting said information distribution apparatus for information;
on the basis of said specification input accepted in said specification input acceptance step, a duplicate provision decision step for referencing a list containing information which has been supplied before to determine whether the information requested this time is one provided before; and
a notification step for notifying a user of said communication terminal of said decision result if said decision result in said duplicate provision decision step at least indicates that the requested information is one provided before.

18. The duplicate distribution preventing method according to claim 17, further comprising:
if said requested information is not one provided before in said duplicate provision decision step, a provision request transmission step for transmitting the request for said information to the information distribution apparatus; and
a provision history adding step for adding information-identification information for identifying said requested information to said list.

19. The duplicate distribution preventing method according to claim 17 or 18, further comprising:
after that said requested information is one provided before has been notified in said notification step in said communication terminal, a retransmission specification input acceptance step for accepting a retransmission specification input for directing a request for the retransmission of said requested information;
if said retransmission specification input has been accepted in said retransmission specification input acceptance step, a retransmission request transmission step for transmitting the retransmission request for said requested information from said communication terminal to said information distribution apparatus.

20. A communication terminal comprising:
list holding means for folding a list of information-identification information about information provided before;
specification input acceptance means for accepting a specification input for an information distribution apparatus to provide information;
duplicate provision decision means for referencing, on the basis of said specification input received by said specification input acceptance means, said list held in said list holding means to determine whether the information requested this time is one provided before; and
if said decision result of said duplicate provision decision means indicates that at least the requested information is one provided before, notification means for notifying a user of said communication terminal of said decision result.

21. The communication terminal according to claim 20, further comprising:
if the information requested for provision is found not one provided before by said duplicate provision decision means, provision request transmission means for transmitting the request for said information to said information distribution apparatus; and
provision history adding means for adding information-identification information for identifying said information to be requested to said list.

22. The communication terminal according to claim 20 or 21, further comprising:
after that said requested information is one provided before has been notified by said notification means, retransmission specification input acceptance means for accepting a retransmission specification input for directing a request for the retransmission of said requested information;
if said retransmission specification input has been accepted by said retransmission specification input acceptance means, retransmission request transmission means for transmitting the retransmission request for said-requested information to said information distribution apparatus.
